# EUROPÄISCHE PATENTSCHRIFT

(11) **EP 2 699 826 B1**
(45) Veröffentlichungstag und Bekanntmachung des Hinweises auf die Patenterteilung: **21.01.2015**
(21) Anmeldenummer: 11757782.5
(22) Anmeldetag: 17.09.2011
(51) Int. Cl.: F16H 61/688, F16H 61/02

(54) **VERFAHREN ZUM BETREIBEN EINES KRAFTFAHRZEUGS IM SCHUBBETRIEB**
METHOD FOR OPERATING A MOTOR VEHICLE IN OVERRUN MODE
PROCÉDÉ PERMETTANT DE FAIRE FONCTIONNER UN VÉHICULE AUTOMOBILE EN POUSSÉE

(30) Priorität: 20.04.2011 DE 102011018325
(43) Veröffentlichungstag der Anmeldung: 26.02.2014
(73) Patentinhaber: Audi AG, 85045 Ingolstadt (DE); Conti Temic Microelectronic GmbH, 90411 Nürnberg (DE)
(72) Erfinder: WINKLER, Josef, 85110 Kipfenberg (DE); ERTEL, Rainer, 90763 Fürth (DE); HINKEL, Gerhard, 91230 Happburg (DE); NITZ, Lars, 90425 Nürnberg (DE); SCHÄFER, Bernd, 85110 Kipfenberg (DE)
(74) Vertreter: Herbst, Matthias Heinz
(86) Internationale Anmeldenummer: PCT/EP2011/004666
(87) Internationale Veröffentlichungsnummer: WO 2012/143022

(56) Entgegenhaltungen:
- EP-A1- 2 063 152
- EP-A2- 1 450 074
- EP-A2- 1 450 076
- EP-A2- 1 544 514
- WO-A2-03/074908
- DE-A1- 19 718 466
- GB-A- 2 353 339
- US-A- 4 944 199

## Beschreibung

Die Erfindung betrifft ein Verfahren zum Betreiben eines Kraftfahrzeugs, beansprucht im Anspruch 1 und ein Kraftfahrzeug, beansprucht im Anspruch 9. Vorausgesetzt ist, dass das Kraftfahrzeug einen Primärantrieb umfasst, der zum Drehen einer Welle dient, z.B. eine Verbrennungskraftmaschine mit einer Kurbelwelle. Der Primärantrieb soll hierbei über eine Zwischeneinrichtung mit Bodenkontaktelementen, insbesondere Rädern des Kraftfahrzeugs gekoppelt sein. Die Zwischeneinrichtung umfasst eine Kupplung und ggf. ein Getriebe, wobei die Kupplung hierbei in das Getriebe integriert sein kann. Vorausgesetzt ist eine regelbare Zwischeneinrichtung, insbesondere eine regelbare Kupplung, es soll also durch Variation einer Stellgröße (die im Beispiel auf die Kupplung mehr oder weniger direkt bezogen ist) das über die Zwischeneinrichtung übertragene Drehmoment verändert werden können, so dass eine definierte Drehzahl des Primärantriebs eingestellt werden kann. Eine solche Kupplung ist im Beispiel also in Zwischenzustände verbringbar zwischen einem Zustand des Ausgekoppeltseins und einem Zustand, bei dem ein maximales Drehmoment übertragen wird, die Kupplung also vollständig geschlossen ist.

Bekannt ist es, bei einer Fahrt eines solchen Kraftfahrzeugs zu erfassen, ob die Bewegung des Kraftfahrzeugs im Schubbetrieb erfolgt, also der Kraftfluss von den Rädern oder anderen Bodenkontaktelementen wie z.B. einer Kette zur (Kurbel-)Welle verläuft und nicht umgekehrt wie im Zugbetrieb. Eine solche Schubphase kann man z. B. anhand der Stellung des Fahrpedals erfassen: Insbesondere, wenn der Fahrer das Fahrpedal nicht mehr betätigt, wird vom Primärantrieb (z.B. Verbrennungskraftmaschine) kein aktiver Vortrieb mehr erzeugt. Es gibt nun die sogenannte Schubabschaltung: Im Schub wird der Primärantrieb nur mit der über die Bodenkontakteinheiten, durch die Kupplung übertragene eingespeisten kinetischen Energie versorgt, im Beispielsfall eines Kraftfahrzeuges mit Verbrennungskraftmaschine und Getriebe also die Treibstoffzufuhr zur Verbrennungskraftmaschine unterbunden, wodurch Treibstoff eingespart wird, die Kupplung wird nicht geöffnet, die Drehzahl der Kurbelwelle entspricht der Drehzahl auf der Getriebeseite und ist somit proportional zur Abtriebsdrehzahl der Zwischeneinrichtung. Geringe Drehzahldifferenzen ergeben sich nur aufgrund eines prinzipiell möglichen Mikroschlupfs, der aus Gründen der Einfachheit in nachfolgender Beschreibung vernachlässigt wird. Dadurch, dass sich die Welle des Primärantriebs noch mit ausreichender Drehzahl dreht, kann relativ schnell wieder eine Vortriebsleistung bereitgestellt werden, wenn es eine entsprechende Anforderung durch den Fahrzeugführer zum Beispiel über das Fahrpedal gibt.

Zur Schubabschaltung gehört es auch, dass bei Unterschreiten eines Grenzwertes für die Drehzahl der Primärantriebswelle wieder mit der Versorgung mit Primärenergie (im Fall eines Verbrennungsmotors mit Kraftstoff) begonnen wird, damit die Drehzahl des Primärantriebs nicht zu niedrig wird. Bei dieser Grenzdrehzahl wird die Kupplung geöffnet.

Während der Schubabschaltung wirkt der Primärantrieb aufgrund innerer Verluste (z.B. Kompression in der Verbrennungskraftmaschine, mechanische Verluste, etc.) verzögernd auf den Abtrieb, wobei die über den Abtrieb eingespeiste kinetische Energie größtenteils in nicht mehr nutzbare Energieformen umgewandelt wird (z.B. Wärme). Diese nicht mehr nutzbare Energie wird nachfolgend als Verlustenergie bezeichnet. Es wäre wünschenswert, wenn diese Energie zumindest teilweise genutzt werden könnte, um elektrische Energie zu gewinnen, z.B. über eine elektrische Maschine.

Als Alternative zur Schubabschaltung kennt man es auch, im Schub die Kupplung zu öffnen und den Primärantrieb im Leerlauf zu betreiben. Dann kommt es nicht dazu, dass der Primärantrieb kinetische Energie aufnimmt. Außerdem ist im Beschleunigungsfall kein erneuter Startvorgang für den Primärantrieb notwendig. Nachteilig ist hier der Verbrauch von Primärenergie (z.B. Kraftstoffverbrauch bei Einsatz eines Verbrennungsmotors als Primärantrieb) für den Leerlaufbetrieb.

Ebenso ist es möglich, im Schub die Kupplung zu öffnen und den Primärantrieb auszuschalten. Hierdurch wird durch den Primärantrieb weder Primärenergie noch kinetische Energie aufgenommen. Nachteilig ist hieran, dass im Beschleunigungsfall ein erneuter Startvorgang für den Primärantrieb notwendig ist.

Die US 4 944 199 A offenbart eine Steuerungseinrichtung für ein Fahrzeug mit einem Automatikgetriebe, welches eine Wandlerüberbrückungskupplung umfasst. Die Wandlerüberbrückungskupplung ist zwischen einer Abtriebswelle eines Motors des Fahrzeugs und einer Eingangswelle des Automatikgetriebes angeordnet. Die Wandlerüberbrückungskupplung wird bei einer Drehzahl aktiviert, welche größer ist als eine Lösedrehzahl, bei welcher die Wandlerüberbrückungskupplung in eine Lösestellung verbracht wird. Die Lösedrehzahl wird vorgegeben, wenn der Motor verzögert wird.

Die Steuerungseinrichtung umfasst Mittel, um eine Betriebsdrehzahl des Motors zu erfassen sowie Mittel, um eine Verzögerungsrate des Motors zu berechnen. Die Lösedrehzahl wird dabei in Abhängigkeit von der Verzögerungsrate derart vorgegeben, dass die Lösedrehzahl mit zunehmender Verzögerungsrate größer wird. Es sind Mittel vorgesehen, um ein Zuführen von Kraftstoff in einen Zylinder des Motors zu beenden, wenn der Motor abgebremst wird. Ferner sind Mittel vorgesehen, um das Zuführen von Kraftstoff wieder aufzunehmen, wenn die Betriebsdrehzahl eine Wiederaufnahmedrehzahl erreicht, wobei die Wiederaufnahmedrehzahl geringer ist als die Lösedrehzahl. Dabei sind Mittel vorgesehen, um die Lösedrehzahl in Abhängigkeit von der Verzögerungsrate derart zunehmend zu korrigieren, dass die Differenz zwischen der Lösedrehzahl und der Wiederaufnahmedrehzahl mit zunehmender Verzögerungsrate größer wird.

Der EP 1 450 074 A2 ist ein Verfahren zum Steuern des Drehmoments als bekannt zu entnehmen, welches zwischen zwei Kupplungen eines Doppelkupplungsgetriebes während eines Gangwechsels verteilt wird. Diese Schrift offenbart die Merkmale der Oberbegriffe der Ansprüche 1 und 9.

Aus der EP 1 544 514 A2 ist eine Steuerungseinrichtung für einen Drehmomentwandler als bekannt zu entnehmen, wobei der Drehmomentwandler eine Wandlerüberbrückungskupplung umfasst. Die Wandlerüberbrückungskupplung ist eine Zwischeneinrichtung, welche in einen Zustand des Ausgekoppeltseins und einen Zustand des Geschlossenseins verbringbar ist. Die Wandlerüberbrückungskupplung ist mit einem Differenzialdruck versorgbar, in welchem der Zustand des Geschlossenseins vorliegt, so dass ein Durchrutschen der Wandlerüberbrückungskupplung vermieden ist.

Weiterhin ist aus der EP 1 540 076 A2 ein Verfahren zum Steuern der Zeitabstimmung von Schaltvorgängen eines Doppelkupplungsgetriebes bekannt. Ein solches Doppelkupplungsgetriebe umfasst als Zwischeneinrichtungen zwei Kupplungen, welche zwischen einem jeweiligen Zustand des Ausgekoppeltseins und einem jeweiligen Zustand des vollständigen Geschlossenseins verbringbar sind. Ferner sind die Kupplungen in Zwischenzustände zwischen dem Zustand des Ausgekoppeltseins und dem Zustand des vollständigen Geschlossenseins verbringbar.

Die DE 197 18 466 A1 offenbart eine Steuervorrichtung für die Überbrückungskupplung zur Verwendung in einem Kraftfahrzeug, das mit einer Maschine, einem automatischen Schaltgetriebe und einem Drehmomentwandler versehen ist. Die Überbrückungskupplung ist mit variabler Eingriffskraft betriebsfähig, um ein gesteuertes Ausmaß an mechanischer Verbindung zwischen der Maschine und dem automatischen Schaltgetriebe bei Verzögerungsgetrieben zu bieten.

Es sind Einrichtungen zum Erfassen von Fahrzeugbetriebsbedingungen einschließlich der Maschinenausgangsleistung vorgesehen. Ferner sind Einrichtungen zum Ermitteln eines Fahrbetriebes zur Änderung von Beschleunigungs- und Gleichförmigkeitszuständen in einem Verzögerungszustand vorgesehen. Darüber hinaus umfasst die Steuervorrichtung eine Steuereinrichtung zum steuern der Eingriffskraft der Überbrückungskupplung, wobei die Steuereinrichtung eine Einrichtung zum Berechnen eines ersten Werts auf Grundlage der erfassten Fahrzeugbetriebsbedingungen enthält.

Die Steuereinrichtung enthält eine Einrichtung zum Berechnen eines zweiten Wertes auf der Grundlage der erfassten Maschinenausgangsleistung sowie eine Einrichtung zum Einteilen der Überbrückungskupplungskraft auf einen Wert, der im Wesentlichen gleich dem ersten Wert plus zweiten Wert in einer ersten Stufe der Kupplungskraftsteuerung ist, wenn die Maschinenausgangleistung positiv bleibt, nachdem der Fahrbetrieb ermittelt wird. Die Steuereinrichtung umfasst weiterhin eine Einrichtung zum Vermindern der Überbrückungskupplungskraft mit einer vorbestimmten Geschwindigkeit auf den ersten Wert bei einer zweiten Stufe der Kupplungskraftsteuerung, nachdem die Maschinenausgangsleistung negativ wird.

Der GB 2 353 339 A ist eine Fahrzeuggetriebeeinrichtung mit einer Hauptkupplung und mit Kupplungsbetätigungsmitteln zum Steuern der Hauptkupplung als bekannt zu entnehmen. Die Fahrzeuggetriebeeinrichtung umfasst ferner ein Getriebe mit mehreren Übersetzungen sowie mit einem Gangeinlegemechanismus, um eine Betriebsübersetzung des Getriebes einzulegen.

Darüber hinaus sind elektronische Steuerungsmittel vorgesehen, um die Kupplungsbetätigungsmittel und den Gangeinlegemechanismus zu steuern. Die elektronischen Steuerungsmittel umfassen Mittel, um den eingelegten Gang, die Drehzahl eines Motors, die Fahrzeuggeschwindigkeit und den Öffnungsgrad einer Drosselklappe des Motors zu erfassen. Die Steuerungsmittel sind dazu ausgelegt, den eingelegten Gang zu halten, während die Fahrzeuggeschwindigkeit oberhalb eines vorgebbaren Schwellenwerts einer zweiten Gangs des Getriebes ist und wenn das Fahrzeug verzögert wird.

Die Steuerungsmittel sind ferner dazu ausgelegt, ausgehend von einem aktuell eingelegten, höheren Gang zu dem zweiten Gang herunterzuschalten, wenn das Fahrzeug verzögert wird und wenn die Fahrzeuggeschwindigkeit unter den Schwellenwert sinkt, wobei der zweite Gang gehalten wird, während das Fahrzeug verzögert wird, und wobei die Fahrzeuggeschwindigkeit unterhalb des zweiten Schwellenwerts ist. Die Kontrollmittel bewirken, dass die Kupplungsbetätigungsmittel die Kupplung entkoppeln, d. h. öffnen, um die Drehzahl des Motors oberhalb eines vorgebbaren Minimumwerts zu halten.

Die EP 2 063 2 A1 offenbart ein Verfahren zum Schalten eines Doppelkupplungsgetriebes in einem mit einem Motor betriebenen Fahrzeug, mit einer ersten Kupplung und mit einer zweiten Kupplung sowie mit einem ersten Teilgetriebe und einem zweiten Teilgetriebe. Dem ersten Teilgetriebe sind die erste Kupplung und eine erste Gruppe von Gängen zugeordnet, während dem zweiten Teilgetriebe die zweite Kupplung und eine zweite Gruppe von Gängen zugeordnet sind.

Darüber hinaus ist aus der WO 03/074908 A2 ein Verfahren zum Steuern und/oder Regeln eines Doppelkupplungsgetriebes bei einer Überschneidungsschaltung bekannt, wobei zumindest eine Kupplung des Doppelkupplungsgetriebes derart angesteuert wird, dass eine Schlupfregelung an einer Kupplung durchgeführt wird.

Es wäre somit wünschenswert, einen Kompromiss zu finden derart, dass die Nachteile der genannten Möglichkeiten eines Schubbetriebs jeweils in nur verringertem Maße auftreten.

Es ist somit Aufgabe der vorliegenden Erfindung, die Energiebilanz beim Betreiben eines Kraftfahrzeugs insbesondere im Schubbetrieb zu verbessern, ohne den Primärantrieb im Fall einer Beschleunigungsphase neu starten zu müssen.

Die Aufgabe wird in einem Aspekt durch ein Verfahren zum Betreiben eines Kraftfahrzeugs gemäß Patentanspruch 1 und in einem anderen Aspekt durch ein Kraftfahrzeug mit den Merkmalen gemäß Patentanspruch 9 gelöst.

Bei dem erfindungsgemäßen Verfahren wird somit im Falle, dass die Bewegung des Kraftfahrzeugs im Schubbetrieb erfolgt und dies erfasst wird, durch automatisches Einstellen der Stellgröße bezüglich der Zwischeneinrichtung, insbesondere Kupplung, die Drehzahl der Primärantriebswelle auf einen beliebigen Wert, der noch eine Schubabschaltung gewährleistet, reduziert, indem die Zwischeneinrichtung in einen der eingangs genannten Zwischenzustände verbracht wird, in welchem es zu einer als Kopplungsschlupf bezeichneten Differenz aus der Drehzahl der Welle und der Drehzahl der Zwischeneinrichtung kommt.

Die Erfindung beruht auf der Erkenntnis, dass die inneren Verluste des Primärantriebs von dessen Wellendrehzahl abhängig sind. Die Verlustenergie ist insbesondere bei höheren Drehzahlen größer als bei niedrigeren Drehzahlen. Als Beispiel kann bei einem Dieselmotor aus der Verlustenergie eine Verlustleistung von 25 kW bei einer Umdrehungszahl von 3000 U/min resultieren, die sich bei 1000 U/min auf 6 kW reduziert.

Bevorzugt wird hierbei die Drehzahl der Welle des Primärantriebs im Schubbetrieb auf einen vorbestimmten Wert eingestellt, insbesondere geregelt, der sich als besonders vorteilhaft erweist. Dieser Wert kann davon abhängig sein, mit welcher Strategie das Kraftfahrzeug insgesamt betrieben werden soll. Insbesondere aber liegt der vorbestimmte Drehzahlwert bevorzugt oberhalb eines Wertes für die Drehzahl der Welle des Primärantriebs, bei dem eine Steuereinrichtung des Kraftfahrzeugs im Schubbetrieb den Verbrauch von Energie bewirken würde. Im bevorzugten Beispielsfall einer Verbrennungskraftmaschine wäre dies der Drehzahlwert bei dem Kraftstoff eingespritzt werden würde, um eine Mindestdrehzahl zu halten, damit das Kraftfahrzeug aus dem Schub heraus wieder möglichst schnell beschleunigt werden kann, sollte dies der Fahrzeugführer wünschen.

Ein Kraftfahrzeug, bei dem die Erfindung in besonders vorteilhafter Weise durchführbar ist, umfasst ein Doppelkupplungsgetriebe als Teil der Zwischeneinrichtung. Hintergrund hierfür ist, dass die als Kupplungsschlupf bezeichnete Differenz aus der Drehzahl der Primärantriebswelle und der Drehzahl der Zwischeneinrichtung durch die Verringerung der Drehzahl der Primärantriebswelle steigt, wodurch sich die inneren Verluste in der Kupplung erhöhen. Zur Reduktion dieser inneren Verluste muss der Kupplungsschlupf reduziert werden, ohne dabei die Drehzahl der Primärantriebswelle wieder zu verändern. Dies kann durch eine Reduktion der Drehzahl der Welle der Zwischeneinrichtung erreicht werden, indem ein Gangwechsel (nämlich bei der gewöhnlichen Benennung der Gänge zu einem höheren Gang hin) auf der nicht im Eingriff befindlichen und daher als passiv bezeichneten Getriebeeingangswelle im Doppelkupplungsgetriebe erfolgt. Nach Abschluss des Gangwechsel wird die Kupplung der aktiven Getriebeeingangswelle, über welche die Drehzahl der Primärantriebswelle eingestellt wird, geöffnet und gleichzeitig die Kupplung der passiven Getriebeeingangswelle geschlossen. Die Überschneidung der beiden Kupplungen erfolgt dabei so, dass die Drehzahl der Welle des Primärantriebes unverändert bleibt.

Das erfindungsgemäße Kraftfahrzeug weist eine Einrichtung zum Erfassen auf, ob eine Bewegung des Kraftfahrzeugs im Schubbetrieb erfolgt, und erfindungsgemäß ist eine Einrichtung zum Variieren der Stellgröße bezüglich der Zwischeneinrichtung in dem Kraftfahrzeug ausgelegt, im Schubbetrieb durch Einstellen der Stellgröße die Drehzahl der Welle des Primärantriebs zu verringern. In dem erfindungsgemäßen Kraftfahrzeug wird somit durch die Einrichtung zum Variieren das erfindungsgemäße Verfahren ausgeführt. Typischerweise ist die Einrichtung zum Variieren eine Steuereinheit. Bei einer bevorzugten Ausführungsform mit einem Doppelkupplungsgetriebe, das eine Mehrzahl von Gängen aufweist, ist diese Steuereinheit dann dazu ausgelegt, nach Verringerung der Drehzahl im Schubbetrieb zusätzlich Gangwechsel zu bewirken.

Die für das zugehörige Verfahren genannten Vorteile gelten gleichermaßen für das erfindungsgemäße Kraftfahrzeug.

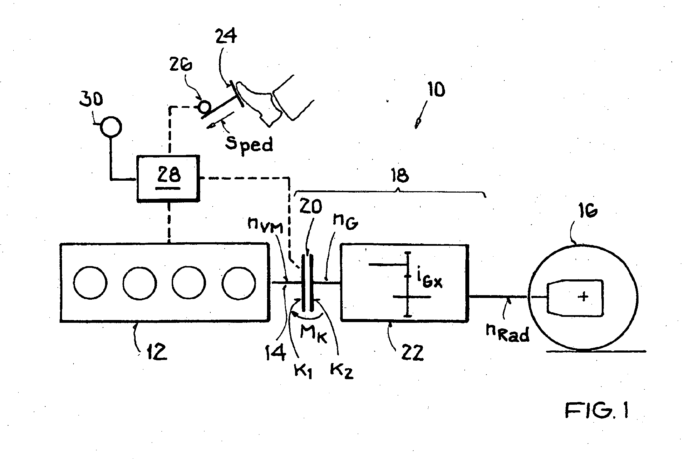

Nachfolgend wird eine bevorzugte Ausführungsform der Erfindung unter Bezug auf die Zeichnung näher beschrieben. Bei dieser bevorzugten Ausführungsform beinhaltet die Zwischeneinrichtung ein 7-Gang-Doppelkupplungsgetriebe. Weiterhin wird eine Verbrennungskraftmaschine als Primärantrieb verwendet. In der Zeichnung zeigt
- Fig. 1: eine schematische Abbildung der zur Beschreibung eines Ausführungsbeispiels der Erfindung notwendigen Komponenten eines Kraftfahrzeugs und
- Fig. 2: eine Mehrzahl von Kurven, die den zeitlichen Verlauf bestimmter Größen in einem Ausführungsbeispiel eines erfindungsgemäßen Verfahrens veranschaulichen. Details, die nicht für das Verständnis der Funktionalität relevant sind, sind nicht dargestellt.

Ein im Ganzen mit 10 bezeichnetes Kraftfahrzeug weist eine Verbrennungskraftmaschine 12 auf, welche eine Kurbelwelle 14 umfasst, die sich mit der Drehzahl n_{VM} dreht. Die Kurbelwelle 14 ist mit einem Rad 16 des Kraftfahrzeugs über ein Doppelkupplungsgetriebe 18 verbunden bzw. koppelbar. In der symbolischen Darstellung ist die Kupplung 20 durch Kupplungsscheiben K₁ und K₂ dargestellt, und das Getriebe 22 beinhaltet eine Getriebedrehzahl n_{G}. Die Drehzahl des Rades 16 heißt n_{Rad}.

In dem Kraftfahrzeug 10 ist ein Fahrpedal ("Gaspedal") 24 vorgesehen, bei dessen Betätigung Kraftstoff in die Verbrennungskraftmaschine 12 eingespritzt wird. Die Stellung des Fahrpedals 24 wird hierbei in einer Messeinrichtung 26 erfasst, die die Messsignale einer Steuereinrichtung 28 zuführt. Die Steuereinrichtung 28 bewirkt das Einspritzen von Kraftstoff in die Verbrennungskraftmaschine 12, und gleichzeitig kann sie dafür sorgen, die Kupplung 20 zu schließen. Die Kupplung 20 ist vorliegend regelbar, und zwar kann das über die Kupplung 20 übertragene Drehmoment M_{K} bei ansonsten gleichen Bedingungen variabel sein.

Durch die Steuereinrichtung 28 wird erkannt, wenn sich das Kraftfahrzeug im Schubbetrieb befindet: Das Fahrpedal 24 ist hierbei in seiner Null-Stellung, also nicht niedergedrückt, und das Kraftfahrzeug bewegt sich, was z. B. durch einen Drehzahlmesser 30 an einem Rad 16 des Kraftfahrzeugs ermittelbar ist (wobei der Drehzahlmesser 30 in der Figur aus Gründen der Übersichtlichkeit vom Rad 16 getrennt dargestellt ist).

Die Steuereinrichtung 28 hat im vorliegenden Beispiel die Aufgabe, das Kraftfahrzeug 10 möglichst energieeffizient zu betreiben. Im Rahmen einer konventionellen, in modernen PKW implementierten Schubabschaltung bleibt die Kupplung 20 normalerweise geschlossen, damit das Moment M_{K} auf die Kuppelwelle 14 übertragen wird, es also zu einem Kraftfluss zwischen dem Rad 16 und der Verbrennungskraftmaschine 12 kommen kann. Damit wird bewirkt, dass die Verbrennungskraftmaschine 12 einem Stillstand nicht zu nahe kommt, dass also die Drehzahl n_{VM} der Kurbelwelle 14 einen vorbestimmten Grenzwert nicht unterschreitet. Dieser Grenzwert ist so gewählt, dass aus dem laufenden Betrieb heraus, bei ausrollendem Fahrzeug 10, noch innerhalb relativ kurzer Zeit eine Beschleunigung des Kraftfahrzeugs möglich ist.

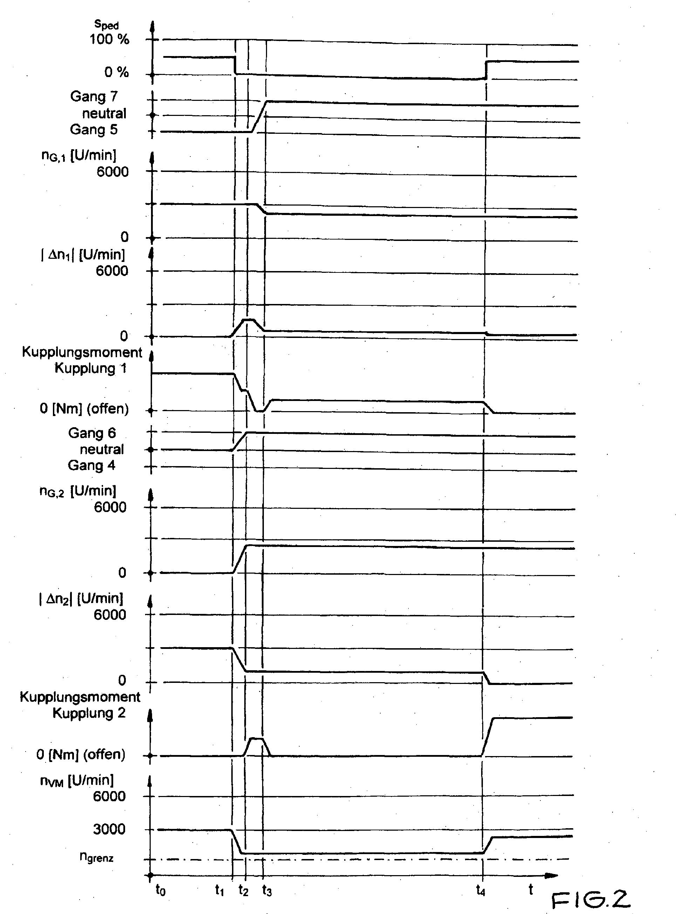

Das erfindungsgemäße Verfahren wird nun anhand von Fig. 2 erläutert:

Zu einem Zeitpunkt t₀ fährt das Kraftfahrzeug mit einer endlichen Geschwindigkeit, wobei für den betrachteten Zeitraum vorausgesetzt ist, dass diese im Wesentlichen gleich bleibt. Die Stellung s_{ped} des Fahrpedals 24 beträgt vorliegend 50%.

Zum Doppelkupplungsgetriebe 18 ist vorausgesetzt, dass es eine erste Getriebeeingangswelle mit der Drehzahl n_{G,1} hat, zu der der Gangsteller mit den Gängen 5 und 7 gehört. Es weist eine zweite Getriebeeinganswelle auf, die die Drehzahl n_{G,2} hat, und der zugehörige Gangsteller weist die Gänge 4 und 6 auf.

Vorliegend ist davon ausgegangen, dass die erste Getriebeeingangswelle angekuppelt und somit aktiv ist und der fünfte Gang des Getriebes 22 eingelegt ist. Die Drehzahl der ersten Welle beträgt ca. 3000 U/min. Da die zur Getriebeeingangswelle 1 gehörende Kupplung geschlossen ist, beträgt der Kupplungsschlupf Δn₁ zwischen der Getriebeseite der Kupplung und der Seite der Verbrennungskraftmaschine ungefähr Null, die Drehzahlen beider Seiten sind also gleich. Die zweite Getriebeeingangselle ist abgekuppelt. Dies bedeutet, dass die zur Getriebeeingangswelle 2 zugehörige Kupplung vollständig geöffnet und der Gangstellerin Neutralstellung zwischen den Gängen 4 und 6 ist. Die Drehzahl n_{G,2} ist ungefähr Null. Die Drehzahl der Verbrennungskraftmaschine bzw. der Kurbelwelle 14, n_{VM}, beträgt ebenfalls 3000 U/min, da der Kupplungsschlupf Δn₁ ungefähr Null ist.

Zum Zeitpunkt t₁ nimmt nun der Fahrzeugführer seinen Fuß vom Fahrpedal 24, und das Fahrzeug 10 gelangt in die Schubphase. Aufgrund der relativ hohen Drehzahl n_{VM} ergeben sich hohe innere Verluste in der Verbrennungskraftmaschine. Aus diesem Grunde wird die Kraft, mit der die Kupplungsscheiben K₁ und K₂ kraftschlüssig gegeneinander gedrückt werden, verringert, sodass sich das übertragene Moment M_{K} verringert. Da die Drehzahl der Kurbelwelle abnimmt, kommt es zu einem endlichen Kupplungsschlupf Δn₁, d. h. die Drehzahl n_{VM} ist nicht mehr unmittelbar der Drehzahl n_{G,1} = i_{G5} · n_{Rad}, wobei i_{G5} das Übersetzungsverhältnis des Getriebes 22 für den 5. Gang (inkl. evtl. vorhandener fester Übersetzungsstufen wie beispielsweise eines Differentials) ist. Die Drehzahl n_{VM} der Kurbelwelle 14 ist daher von der Drehzahl n_{Rad} des Rades 16 entkoppelt, d.h. n_{VM} = i_{G5} n_{Rad}-Δn₁. Die Drehzahl der Kurbelwelle n_{VM} wird durch die Steuereinrichtung 28 insbesondere auf einen Wert von 1000 U/min heruntergefahren, knapp über der Grenze, ab der die Steuereinrichtung zum Halten einer Grenzdrehzahl n_{Grenz} Kraftstoff einspritzen würde.

Aufgrund des hohen Schlupfes Δn₁ ergeben sich nun hohe innere Verluste in der Kupplung. Diese können durch eine Reduktion des Schlupfes verringert werden. Eine Reduktion des Schlupfes kann durch eine Verringerung der Drehzahl der Getriebeseite erreicht werden, indem die Getriebeübersetzung entsprechend verändert wird. Im Beispiel wird in den siebten Gang geschaltet, wodurch sich die kleinstmögliche getriebeseitige Drehzahl einstellt. Der direkte Wechsel zwischen Gänge, die auf der gleichen Getriebeeingangswelle angeordnet sind, ist jedoch nur mit Öffnen der zur Getriebeeingangswelle zugehörigen Kupplung möglich, sodass die Motordrehzahl in den Leerlauf abfallen würde. Aus diesem Grunde erfolgt für den Gangwechsel vom 5. in den 7. Gang zunächst ein Wechsel zwischen Teilgetriebe 1 und Teilgetriebe 2:

Es wird zunächst im Teilgetriebe 2 der sechste Gang eingelegt, wodurch die zweite Getriebeeingangswelle mechanisch mit der Abtriebswelle verbunden wird. Dadurch kommt es zu einer endlichen Drehzahl n_{G,2} der zweiten Getriebeeingangswelle. Nachdem der sechste Gang im zweiten Teilgetriebe eingelegt ist, wird nun, beginnend mit dem Zeitpunkt t₂, die erste Kupplung geöffnet und die zweite Kupplung geschlossen. Dies erfolgt derart, dass die Motordrehzahl nicht unterhalb der Grenzdrehzahl n_{Grenz} fällt, sondern bei der Drehzahl von 1000 U/min bleibt. Dadurch, dass nun über die Kupplung zur zweiten Getriebeeingangswelle das Moment übertragen wird, ist der Schlupf Δn₂ kleiner als zuvor der Schlupf Δn₁, da die Übersetzung für den sechsten Gang zu einer kleineren getriebeseitigen Drehzahl als die des fünften Ganges führt. Die inneren Verluste an der Kupplung sinken somit. Um die Kupplungsverluste weiter zu senken, wird sodann der fünfte Gang ausgelegt und dafür der siebte Gang eingelegt. Es stellt sich dann, bedingt durch die unterschiedliche Übersetzung der beiden Gänge 5 und 7, eine niedrigere Drehzahl n_{G,1} bis zum Zeitpunkt t₃ ein.

Ab dem Zeitpunkt t₃ wird nun wieder die kraftübertragende Kupplung gewechselt, sodass abschließend die Kupplung zur ersten Getriebeeingangswelle die Motordrehzahl n_{VM} einstellt. Der vorliegende Kupplungsschlupf Δn₁, der nun geringer als der Kupplungsschlupf Δn₁ zwischen den Zeitpunkten t₁ und t₂ und auch geringer als der Kupplungsschlupf n₂ zwischen den Zeitpunkten t₂ und t₃ ist, kann durch Verwendung anderer Übersetzungen nicht weiter verringert werden.

Zum Zeitpunkt t₄ wird nun das Fahrpedal wieder betätigt. Der Fahrzeugführer hat damit signalisiert, dass der Schubbetrieb verlassen werden soll. Die Kupplung zur ersten Getriebeeingangswelle wird geöffnet, und die zur zweiten Getriebeeingangswelle gehörende Kupplung geschlossen. Das Öffnen der einen und Schließen der anderen Kupplung erfolgt vorliegend derart, dass die Motordrehzahl n_{VM} auf die Wellendrehzahl n_{G,2} der zweiten Getriebeeingangswelle angehoben wird. Der Schlupfbetrieb wird somit beendet (Δn₂ = 0). Nachdem die Kraftübertragung nun komplett über die Kupplung zur zweiten Getriebeeingangswelle erfolgt, ist der Zugbetrieb wiederhergestellt. Alternativ könnte auch der siebte Gang zum Weiterfahren verwendet werden, wobei dann an der Kupplung zur ersten Getriebeeingangswelle das übertragene Moment erhöht werden muss, was zu einem Absinken der Schlupfdrehzahl führt. Dann folgt eine Beschleunigung des Fahrzeugs.

Zusammenfassend wird somit die Verbrennungskraftmaschine 12 durch die Steuereinrichtung 28 abgeschaltet, dreht sich aber mit einer so weit wie möglich reduzierten Drehzahl, um die inneren Verluste der Verbrennungskraftmaschine zu minimieren. Voraussetzung ist, wie schon ausgeführt, die Regelbarkeit der Kupplung 20: Es gibt eine Stellgröße bezüglich der Kupplung 20, die das übertragene Moment M_{K} bestimmt. Bei einer kraftschlüssigen Kupplung ist die Stellgröße z. B. der Druck, mit dem ein Hydraulikzylinder die eine Kupplungsscheibe gegen die andere drückt. Andere Stellgrößen sind denkbar. Durch die Erfindung wird ausgenutzt, dass man eine Kupplung "schleifen" lassen kann, und dies erfolgt im Schubbetrieb automatisch.

Die Erfindung ist auch anwendbar bei Kraftfahrzeugen mit elektrischem Antrieb oder mit anderer Art von Kopplung zwischen Antrieb und Rädern, z.B. einem hydraulischen Getriebe. Sie ist anwendbar bei jeder Art von gleislos fahrendem Landfahrzeug, das nicht notwendigerweise Räder aufweisen muss. Z.B. kann die Erfindung bei einem Kraftrad, einem Nutzfahrzeug, z.B einem landwirtschaftlichen Fahrzeug, einem Kettenfahrzeug, einem Lastkraftwagen, oder eben bei einem Personenkraftwagen eingesetzt werden.

## Patentansprüche

1. Verfahren zum Betreiben eines Kraftfahrzeugs (10) mit einem Antrieb (12), der zum Drehen einer Welle (14) des Antriebs dient, die über eine in Zwischenzustände zwischen einem Zustand des Ausgekoppeltseins und einem Zustand des vollständigen Geschlossenseins verbringbare Zwischeneinrichtung (20, 22) mit Bodenkontaktelementen (16) des Kraftfahrzeugs gekoppelt ist,
**dadurch gekennzeichnet, dass**
über die Zwischeneinrichtung (20,22) durch Variation einer Stellgröße unterschiedliche Drehmomente zwischen Antrieb und Zwischeneinrichtung übertragbar sind, wobei während einer Fahrt des Kraftfahrzeugs erfasst wird, ob die Bewegung des Kraftfahrzeugs im Schubbetrieb erfolgt, und falls dies der Fall ist, durch automatisches Einstellen der Stellgröße die Drehzahl (n_{VM}) der Welle (14) des Antriebs verringert wird, indem die Zwischeneinrichtung (20, 22) in einen der Zwischenzustände verbracht wird, in welchem es zu einer als Kupplungsschlupf (Δn₁) bezeichneten Differenz aus der Drehzahl (n_{VM}) der Welle (14) und der Drehzahl der Zwischeneinrichtung (20, 22) kommt.

2. Verfahren nach Anspruch 1, bei dem die Drehzahl (n_{VM}) der Welle (14) im Schubbetrieb auf einen vorbestimmten Wert eingestellt, insbesondere geregelt wird.

3. Verfahren nach Anspruch 2, bei dem der vorbestimmte Wert oberhalb eines Wertes (n_{Grenz}) für die Drehzahl der Welle (14) liegt, bei dem eine Steuereinrichtung (28) des Kraftfahrzeugs im Schubbetrieb den Verbrauch von Energie durch den Antrieb (12) bewirken würde.

4. Verfahren nach einem der vorhergehenden Ansprüche, bei dem der Antrieb eine Verbrennungskraftmaschine (12) ist, die vorzugsweise eine Kurbelwelle (14) aufweist.

5. Verfahren nach einem der vorhergehenden Ansprüche, bei dem die Zwischeneinrichtung eine Kupplung mit oder ohne Getriebe aufweist.

6. Verfahren nach einem der vorhergehenden Ansprüche, wobei das Kraftfahrzeug ein automatisches Getriebe umfasst und der Kupplungsschlupf (Δn₁) nach Verringern der Drehzahl durch einen Gangwechsel verringert wird.

7. Verfahren nach einem der vorhergehenden Ansprüche, wobei das Kraftfahrzeug ein Doppelkupplungsgetriebe (18) umfasst und der Kupplungsschlupf (Δn₁) nach Verringern der Drehzahl durch einen Gangwechsel verringert wird.

8. Verfahren nach einem der vorhergehenden Ansprüche, bei dem die Bodenkontaktelemente Räder (16) sind.

9. Kraftfahrzeug (10) mit einem Antrieb, insbesondere einer Verbrennungskraftmaschine (12), zu dem eine Welle (14) gehört, wobei der Antrieb (12) über eine in Zwischenzustände zwischen einem Zustand des Ausgekoppeltseins und einem Zustand des vollständigen Geschlossenseins verbringbare Zwischeneinrichtung (20,22) mit Bodenkontaktelementen (16) des Kraftfahrzeugs gekoppelt ist, und mit einer Einrichtung (28) zum Variieren einer Stellgröße bezüglich der Zwischeneinrichtung (20,22), die ein über die Zwischeneinrichtung (20,22) übertragenes Drehmoment (M_{K}) bestimmt, mit einer Einrichtung (26) zum Erfassen, ob eine Bewegung des Kraftfahrzeugs im Schubbetrieb erfolgt, **dadurch gekennzeichnet, dass** die Einrichtung (28) zum Variieren der Stellgröße ausgelegt ist, im Schubbetrieb durch automatisches Einstellen der Stellgröße die Drehzahl der Welle (14) zu verringern, indem die Zwischeneinrichtung (20, 22) in einen der Zwischenzustände verbracht wird, in welchem es zu einer als Kupplungsschlupf (Δn₁) bezeichneten Differenz aus der Drehzahl (n_{VM}) der Welle (14) und der Drehzahl der Zwischeneinrichtung (20, 22) kommt.

10. Kraftfahrzeug (10) nach Anspruch 9, bei dem die Zwischeneinrichtung eine Kupplung (20) und ein Getriebe (22) aufweist und die Bodenkontaktelemente Räder (16) umfassen.

11. Kraftfahrzeug (10) nach Anspruch 9 oder 10 mit einem Doppelkupplungsgetriebe (18) mit einer Mehrzahl von Gängen, **dadurch gekennzeichnet, dass** die Einrichtung zum Variieren der Stellgröße eine Steuereinrichtung (28) umfasst, die dazu ausgelegt ist, nach Verringern der Drehzahl im Schubbetrieb einen Gangwechsel zu bewirken.

## Claims

1. Method for operating a motor vehicle (10) having a drive (12) which is used to rotate a drive shaft (14) which is coupled to ground-contact elements (16) of the motor vehicle by an intermediate device (20, 22) which can be brought into intermediate states between being disengaged and fully engaged, **characterised in that** different torques can be transmitted between the drive and the intermediate device via the intermediate device (20, 22) by varying a correcting variable, it being detected during a journey of the motor vehicle whether the motor vehicle is moving in freewheeling mode and, if this is the case, the rotational speed (n_{VM}) of the drive shaft (14) being reduced by automatically adjusting the correcting variable by the intermediate device (20, 22) being brought into one of the intermediate states in which there is a difference, identified as a clutch slip (Δn₁), between the rotational speed (n_{VM}) of the shaft (14) and the rotational speed of the intermediate device (20, 22).

2. Method according to claim 1, wherein the rotational speed (n_{VM}) of the shaft (14) in freewheeling mode is set to a predetermined value, more particularly regulated.

3. Method according to claim 2, wherein the predetermined value lies above a value (n_{Grenz}) for the rotational speed of the shaft (14), wherein a control device (28) of the motor vehicle would cause the drive (12) to consume energy in freewheeling mode.

4. Method according to any of the preceding claims, wherein the drive is an internal combustion engine (12) which preferably comprises a crankshaft (14).

5. Method according to any of the preceding claims, wherein the intermediate device comprises a clutch with or without a transmission.

6. Method according to any of the preceding claims, wherein the motor vehicle comprises an automatic transmission and the clutch slip (Δn₁) is reduced after reducing the rotational speed by changing gears.

7. Method according to any of the preceding claims, wherein the motor vehicle comprises a dual-clutch transmission (18) and the clutch slip (Δn₁) is reduced after reducing the rotational speed by changing gears.

8. Method according to any of the preceding claims, wherein the ground-contact elements are wheels (16).

9. Motor vehicle (10) having a drive, in particular an internal combustion engine (12), to which a shaft (14) belongs, the drive (12) being coupled to ground-contact elements (16) of the motor vehicle by an intermediate device (20, 22) which can be brought into intermediate states between being disengaged and fully engaged, and having a device (28) for varying a correcting variable relative to the intermediate device (20, 22) and which determines a torque (M_{K}) transmitted via the intermediate device (20, 22), and having a device (26) for detecting whether the vehicle is moving in freewheeling mode, **characterised in that** the device (28) for varying the correcting variable is designed to reduce the rotational speed of the shaft (14) in freewheeling mode by automatically adjusting the correcting variable by the intermediate device (20, 22) being brought into one of the intermediate states in which there is a difference, identified as a clutch slip (Δn₁), between the rotational speed (n_{VM}) of the shaft (14) and the rotational speed of the intermediate device (20, 22).

10. Motor vehicle (10) according to claim 9, wherein the intermediate device comprises a clutch (20) and a transmission (22) and the ground-contact elements comprise wheels (16).

11. Motor vehicle (10) according to either claim 9 or claim 10 having a dual-clutch transmission (18) having a plurality of gears, **characterised in that** the device for varying the correcting variable comprises a control device (28) which is designed to cause a gear change after the rotational speed has been reduced in freewheeling mode.

## Revendications

1. Procédé pour faire fonctionner un véhicule automobile (10) avec un dispositif moteur (12), qui sert à faire tourner un arbre (14) du dispositif moteur, lequel arbre est couplé à des éléments de contact au sol (16) du véhicule automobile par l'intermédiaire d'un dispositif intermédiaire (20, 22) qui peut être mis dans des états intermédiaires entre un état de débrayage et un état d'embrayage complet,
**caractérisé en ce que**, par l'intermédiaire du dispositif intermédiaire (20, 22), différents couples entre dispositif moteur et dispositif intermédiaire peuvent être transmis grâce à une modification d'une grandeur réglante, à savoir que pendant un trajet du véhicule automobile on détecte si le mouvement du véhicule automobile s'effectue en décélération et, si c'est le cas, on réduit par un réglage automatique de la grandeur réglante la vitesse de rotation (n_{VM}) de l'arbre (14) du dispositif moteur, le dispositif intermédiaire (20, 22) étant mis à cet effet dans l'un des états intermédiaires dans lequel on atteint une différence dite patinage d'embrayage (Δn₁) entre la vitesse de rotation (n_{VM}) de l'arbre (14) et la vitesse de rotation du dispositif intermédiaire (20, 22).

2. Procédé selon la revendication 1, selon lequel, en cas de décélération, on règle, et notamment régule, la vitesse de rotation (n_{VM}) de l'arbre (14) à une valeur prédéterminée.

3. Procédé selon la revendication 2, selon lequel la valeur prédéterminée est supérieure à une valeur (n_{Grenz}) pour la vitesse de rotation de l'arbre (14) pour laquelle un dispositif de commande (28) du véhicule automobile en décélération provoquerait la consommation d'énergie par le dispositif moteur (12).

4. Procédé selon l'une des revendications précédentes, selon lequel le dispositif moteur est un moteur à combustion interne (12) qui comporte de préférence un vilebrequin (14).

5. Procédé selon l'une des revendications précédentes, selon lequel le dispositif intermédiaire comporte un embrayage avec ou sans boite de vitesses.

6. Procédé selon l'une des revendications précédentes, selon lequel le véhicule automobile comprend une boîte de vitesses automatique et le patinage d'embrayage (Δn₁) après réduction de la vitesse de rotation est réduit par un changement de vitesse.

7. Procédé selon l'une des revendications précédentes, selon lequel le véhicule automobile comprend une boîte de vitesses à double embrayage (18) et le patinage d'embrayage (Δn₁) après réduction de la vitesse de rotation est réduit par un changement de vitesse.

8. Procédé selon l'une des revendications précédentes, selon lequel les éléments de contact au sol sont des roues (16).

9. Véhicule automobile (10)
avec un dispositif moteur, notamment un moteur à combustion interne (12), auquel appartient un arbre (14), le dispositif moteur (12) étant couplé à des éléments de contact au sol (16) du véhicule automobile par l'intermédiaire d'un dispositif intermédiaire (20, 22) qui peut être mis dans des états intermédiaires entre un état de débrayage et un état d'embrayage complet,
avec un dispositif (28) pour modifier une grandeur réglante concernant le dispositif intermédiaire (20, 22) qui détermine un couple (M_{K}) transmis par l'intermédiaire du dispositif intermédiaire (20, 22)
et avec un dispositif (26) pour détecter si le mouvement du véhicule automobile s'effectue en décélération,
**caractérisé en ce que** le dispositif (28) destiné à la modification de la grandeur réglante est conçu pour réduire la vitesse de rotation de l'arbre (14) en cas de décélération en réglant automatiquement la grandeur réglante, le dispositif intermédiaire (20, 22) étant mis à cet effet dans l'un des états intermédiaires dans lequel on atteint une différence dite patinage d'embrayage (Δn₁) entre la vitesse de rotation (n_{VM}) de l'arbre (14) et la vitesse de rotation du dispositif intermédiaire (20, 22).

10. Véhicule automobile (10) selon la revendication 9, dans lequel le dispositif intermédiaire comporte un embrayage (20) et une boîte de vitesses (22) et les éléments de contact au sol comprennent des roues (16).

11. Véhicule automobile (10) selon la revendication 9 ou 10 avec une boîte de vitesses à double embrayage (18) avec plusieurs vitesses, **caractérisé en ce que** le dispositif destiné à la modification de la grandeur réglante comprend un dispositif de commande (28) qui est conçu pour provoquer un changement de vitesse après réduction de la vitesse de rotation lors d'une décélération.
